# EUROPEAN PATENT SPECIFICATION

(11) **EP 2 784 399 B1**
(45) Date of publication and mention of the grant of the patent: **25.12.2019**
(21) Application number: 14157789.0
(22) Date of filing: 05.03.2014
(51) Int. Cl.: F24D 3/12

(54) **Underlayment tile**
Fliesenunterlage
Tuile de sous-couche

(30) Priority: 05.03.2013 NL 2010396
(43) Date of publication of application: 01.10.2014
(73) Proprietor: Soederhuizen Stenen B.V., 2421 LS Nieuwkoop (NL)
(72) Inventor: Soederhuizen, Dizzy, 2431 AN NOORDEN (NL)
(74) Representative: EP&C

(56) References cited:
- EP-A2- 1 400 641
- WO-A1-2005/124052
- DE-U1- 20 107 338
- DE-U1- 29 703 123
- DE-U1-202006 005 470
- DE-U1-202010 003 557

## Description

The invention relates to an underlayment tile to assemble an underlayment. The underlayment is assembled by interconnecting a plurality of such underlayment tiles. The underlayment tile comprises a tile body. The tile body comprises a bottom side for placing tile body on a planar surface. The bottom side of the tile body defines a planar plane for placement of the tile body onto the surface. The tile body comprises a top side which is arranged to support an upper layer. The tile body further comprises an outer circumferential sidewall. The outer circumferential sidewall includes at least a first sidewall and the second sidewall. The second sidewall is positioned opposite the first sidewall. The tile body comprises at least one pair of a complimentary shaped first and second coupling member. The first and second coupling member are arranged to interconnect two adjacent positioned underlayment tiles. The first coupling member is positioned at the first sidewall. The second coupling member is positioned at the second sidewall. The first and second coupling members are aligned, such that two adjacent positioned underlayment tiles are interconnectable by a pair of a respective first and second coupling member of each underlayment tile.

Such an underlayment tile is known from DE31.37.166 which discloses a solid ground plate which is arranged as an underlayment tile. The ground plate has a top side, a bottom side and a circumferential side wall which includes four side walls. At the side wall, the ground plate is modular interconnectable with another ground plate to build an underlayment. The circumferential side wall has a side wall which is provided with a tongue. The tongue protrudes from the side wall and extends along the whole length of the sidewall. The ground plate has an opposite sidewall which is complementary shaped and provided with a recess. Ground plates can be positioned side by side, in which the tongue of a first ground plate fits in the recess of a second adjacently positioned ground plate. The top side of the ground plate is provided with channel portions which are configured to receive heat conduits. The channel portions extend across the top side of the ground plate. In an assembly of several ground plates, the channel portions of a first ground plate are aligned with channel portions of an adjacent ground plate to form a channel which extends over the whole underlayment.

In practise, the disclosed ground plate has a drawback in that the alignment of the channel portions is not properly provided. Adjacent ground plates can be fastened in rows to a girder by an installer, while the channel portions in between adjacent rows across the girder are not aligned. After the fastening of the ground plates, the installer will perceive that the heat conduits do not fit in the channel portions across the girder which will force the installer to loosen and remount the ground plates. It might be evident, that this is not a satisfying activity.

DE 201.07.338 U discloses a support system for a top comprising the features of the preamble of claim 1. The support system comprises an underlayment tile out of polyurethane. The underlayment tile comprises a circumferential wall which is provided with a plurality of recesses for receiving an insert. The inserts serve to couple neighbouring underlayment tiles. The underlayment tile has open worked configuration and includes recesses at a top surface for receiving an electrical cable.

The general object of the present invention is to at least partially eliminate the above mentioned drawbacks and/or to provide a useable alternative. More specific, it is an object of the invention to provide a underlayment tile which is user-friendly for installation of an underlayment. It is an object of the invention to provide an underlayment tile which intrinsically provides a secure interconnection in between adjacent tiles for a proper alignment of channel portions. It is an object of the invention to provide underlayment tiles which allows a quick installation of the underlayment.

According to the invention, one or more of these objects are achieved by an underlayment tile according to claim 1.

The underlayment tile according to the invention is improved in that the first coupling member is formed as a male member which includes a protrusion. The protrusion protrudes in a longitudinal direction. The longitudinal direction is transverse, in particular perpendicular, to the sidewall of the tile body. Further, the second coupling member is formed as a female member and comprises a recess. The recess is configured to receive the protrusion of the first coupling member. The recess comprises two opposite recess sidewalls for enclosing the protrusion in between the recess sidewalls. The sidewalls of the recess provide a blockage in that two adjacent positioned interconnected underlayment tiles cannot move in a sidewards direction with respect to each other. The sidewards direction is traverse, in particular perpendicular to the longitudinal direction defined by the protrusion. In an assembled condition of two underlayment tiles, in which the underlayment tiles are interconnected, the first and second coupling member block a relative movement of the underlayment tiles in parallel with the planar plane in a direction traverse to the longitudinal direction of the protrusion.

The first and second coupling member of the underlayment tile according to the invention permit a relative movement of two interconnected underlayment tiles about a travel distance in the longitudinal direction. In particular, the relative movement is permitted about a predetermined travel distance of at least 2 mm, in particular at least 3 mm, but preferably at least 5 mm.

The underlayment tile according to the invention comprises a stopper for limiting the travel distance. The stopper has a first stop member and a second stop member. The first and second stop member are complementary shaped. A first stop member of a first underlayment tile can cooperate with a second stop member of a second underlayment tile to establish a stopper function. In an assembled condition of a first and second interconnected underlayment tile, the first stop member of the first underlayment tile interacts with the second stop member of the second underlayment tile. In particular, the first stop member is positioned at the first coupling member and the second stop member is positioned at the second member. The stopper allows a relative movement of two interconnected underlayment tiles about a predetermined stroke, but prevents an undesired release of these underlayment tiles in the longitudinal direction. The stopper prevents a too far movement of two interconnected underlayment tiles in the longitudinal direction which might separate the connection. An undesired release of a once established interconnection of underlayment tiles in the longitudinal direction is prevented by the stopper.

The underlayment tile according to the invention provides several advantages.

Due to the blockage in a lateral traverse direction, two adjacent positioned interconnected underlayment tiles remain aligned in the longitudinal direction. The blockage in the traverse direction prevents a shift of individual underlayment tiles. Herewith, the relative movement of underlayment tiles is made in rows of underlayment tiles. Additionally, channel portions which may be present at the top side of the underlayment tile remain aligned in the assembled condition. After placing the underlayment, an installer may easily fit a line member, like a heating conduit, from above on top of the underlayment. Herewith, the underlayment is suitable to be used as an floor heating underlayment.

The permitted relative movement between interconnected underlayment tiles allows an extension of a placed underlayment. The underlayment can be transformed from a compact configuration to an extended configuration. The presence of the stopper prevents a too far extension between two adjacent underlayment tiles, which might otherwise loosen the underlayment. In first instance, the underlayment can be placed onto a surface in the compact configuration, whereafter the underlayment can be extended to cover a desired surface. The underlayment can be easily tailored to a size of a surface area. The extendable underlayment may make cuttings to adapt the outer contour of the underlayment to a sidewall unnecessary. The placement of the underlayment can be carried out without producing cut off material. Advantageously, the placement of an underlayment can be carried out without producing waste material. Herewith, the placement of the underlayment is environmental friendly and cost effective. Operations of collecting and discharging waste material are no issue.

Additionally, the presence of the stopper prevents an undesired early release of interconnected underlayment tiles in the longitudinal direction during placement of the underlayment which allows a pre-assembly of underlayment tiles. During placement, the stopper advantageously allows a method for a quick installation of an underlayment by interconnecting underlayment mats of pre-assembled underlayment tiles.

In an embodiment of the underlayment tile according to the invention, the protrusion of the first coupling member is an external coupling member. The protrusion extends in an outwards direction away from the sidewall. The protrusion protrudes from the sidewall. In particular, the recess of the second coupling member is an internal coupling member. The recess extends in an inwards direction away from the sidewall. Advantageously, the external protrusion and the internal recess provide a clear indication to a user on how to orient the tiles and assemble the underlayment.

In an embodiment of the underlayment tile according to the invention, the protrusion of the first coupling member comprises a travel blocker for limiting a travel distance in the longitudinal direction of two interconnected underlayment tiles. The travel blocker is arranged to provide a stop at an end of a stroke of the relative movement in between two adjacent positioned underlayment tiles. The travel blocker is a first stop member for stopping a relative movement of two interconnected underlayment tiles at an end of a stroke. The travel blocker as a first stop member interacts with a stopper face of a second stop member of the stopper which is provided at the second coupling member.

In an embodiment of the underlayment tile according to the invention, the travel blocker is formed by an aperture in the protrusion of the first coupling member, while the second coupling member comprises a complementary shaped resilient finger which is in an assembled condition of two underlayment tiles received in the aperture to interact with an aperture side wall to establish the stopper function. The aperture may have an aperture length which defines a travel distance of two connected underlayment tiles.

In an embodiment of the underlayment tile according to the invention, the travel blocker is positioned at the end of the protrusion of the first coupling member. The travel blocker extends away from the protrusion in a transverse direction with respect to the longitudinal direction. Preferably, the travel blocker extends away from the protrusion in a direction towards the bottom side of the tile body. The extending travel blocker interacts with a second stop member at the second coupling member. The travel blocker may interact with a second stop member of the second coupling member which includes a recess stopper face. The travel blocker moves against the recess stopper face at the end of the travel distance.

In an embodiment of the underlayment tile according to the invention, the travel blocker extends about a distance from the protrusion which forms the first coupling member to the planar plane formed by the bottom side. Herewith, the travel blocker provides a support for supporting the first coupling member to a ground surface on which the underlayment tile is placed. The supported first coupling member is more rigid which improves a coupling to a second coupling member when the second coupling member is connected to the first coupling member by placing the second coupling member from above over the first coupling member. When placing the second coupling member over the first coupling member, a force is exerted onto the first coupling member which is supported by the travel blocker.

In an embodiment of the underlayment tile according to the invention, the first and second coupling member provide a click connection to provide a lockage of two underlayment tiles to keep the underlayment tiles in parallel with the planar plane. Two underlayment tiles can be locked to each other to prevent a relative movement in a direction normal to the planar plane. During the placement of an underlayment, the click connection may reduce a risk on an undesired release of underlayment tiles. The click connection keeps the underlayment tiles connected during the time that the underlayment tiles are placed by an installer. The click connection provides a further advantage in that the underlayment tiles can be pre-assembled before finally installing the underlayment. Advantageously, the underlayment tiles can be pre-assembled to form an underlayment mat. The click connection keeps the underlayment tiles in the mat in an assembled condition. The installer may place the underlayment on a surface with a plurality of underlayment mats instead of individual tiles, which will speed up the installation of a complete underlayment. An underlayment mat may be packaged in a flat foil package or in a rolled up package, such that the underlayment mat can be easily handled. An installer may collect a plurality of underlayment mats and bring the underlayment mats to a working area to install the underlayment. After placement of the underlayment on a surface, it may be desired to remove a at least one row of underlayment tiles from the underlayment to tailor the underlayment to a size of a surface area. Advantageously, the click connection can be manually eliminated by a pivoting movement of a row of underlayment tiles relative to a neighbouring row of underlayment tiles. In particular, the click connection can be eliminated by pivoting the at least one row of underlayment tiles about a pivot axis which extends in the traverse direction through neighbouring click connections. The pivot axis is situated in between the at least one row and the remaining part of the underlayment. The click connections are aligned in the traverse direction to enhance the removal of a row by a pivoting movement.

In an embodiment of the underlayment tile according to the invention, the recess of the second coupling member comprises a recess barrier which is positioned at a top side of the tile body. The recess barrier is a first click connection member. The click connection member allows an entry of the first coupling member into the second coupling member in a direction normal to the planar plane. The click connection member allows an entry of the first coupling member into the recess from above or beneath, such that two underlayment tiles can be interconnected by placing the one over the other. The recess barrier as a first click connection member may be formed by a stud at the recess side wall. Preferably, the recess barrier bridges the recess of the second coupling member at the top side. Preferably, the recess barrier is positioned in parallel with the side wall of the underlayment tile. By bridging the recess, the recess barrier is arranged to barricade an introduction of the protrusion of a first coupling member into the recess from above the topside. The recess is open from the bottom side for receiving the protrusion. A first underlayment tile can be placed onto a surface, whereafter a second coupling member of a second underlayment tile is placed from above over a first coupling member of the first underlayment tile. The recess of the second coupling member can be placed from above across the first coupling member to establish a connection between two underlayment tiles. Herewith it is easy to enlarge an underlayment by adding underlayment tiles.

In an embodiment of the underlayment tile according to invention the second coupling member comprises a recess hook, also called click finger, as a second click connection member to enclose the protrusion of the first coupling member in between the recess barrier and the recess hook. In particular, the recess hook is positioned at a recess wall at the bottom side of the underlayment tile. In an inverse embodiment, the recess barrier may be positioned at the bottom side and the recess hook may be positioned at the top side, such that the protrusion of the first coupling member can be received from the top side. The protrusion is hooked in between the recess barrier and the recess hook in the recess to establish the above mentioned click connection. Preferably, the recess hook incorporates the above mentioned recess stopper face which interacts in the assembled condition of two underlayment tiles with the travel blocker. Advantageously, the recess hook has a double functionality which simplifies the configuration of the underlayment tiles.

In an embodiment of the underlayment tile according to the invention, the first coupling member comprises a starting edge. The starting edge is positioned at a top face of the protrusion. In particular, at the top face the protrusion comprises two opposite positioned starting edges, converging edges, for receiving two opposite positioned recess hooks. The starting edge serves for guiding the second coupling member over the first coupling member. In particular, the opposite positioned starting edges serve for enabling a running-in of two opposite positioned recess hooks.

In an embodiment of the underlayment tile according to the invention, the starting edge has a predetermined length. The length of the starting edge is smaller than the length of the protrusion. In particular, the length of the starting edge corresponds with a width of a recess hook. The starting edge is provided along a part of an upper edge of the protrusion. Preferably, the starting edge includes a lead-in edge in a longitudinal direction. The lead-in edge is positioned at a distal end of the starting edge. The lead-in edge improves a receiving of a second coupling member. The lead-in edge leads a received recess hook towards the sidewall. Preferably, the starting edge is positioned close to the sidewall of the underlayment tile. In particular, the starting edge is positioned at a distance of at most 2mm, more in particular at most 1.5mm from the sidewall. In particular, the starting edge is spaced from the sidewall at a distance of at least 0.5mm. Due to the positioning of the starting edge, a placement and connection of an underlayment tile to an already laid underlayment tile results in an interconnection of two underlayment tiles in the compact configuration. In particular, in the compact configuration, the underlayment tiles are spaced from each other at a distance of a respective 2mm, 1.5mm or 0.5mm. After placement of a complete underlayment, the underlayment can immediately be stretched from the compact configuration to the extended configuration.

In an embodiment of the underlayment tile according to the invention, the first and second coupling member are arranged to provide a snap fit connection to provide at least one predetermined snap-position during the relative movement of two interconnected underlayment tiles along a travel distance in the longitudinal direction of the first coupling member. The snap fit connection provides a lockage at a certain position along a stroke in the longitudinal direction, such that a relative position of a first underlayment tile with respect to an adjacent positioned second underlayment tile is fixed. A force which is exerted in the longitudinal direction may overcome a snap-force which keeps the underlayment tile in position to displace the second underlayment tile with respect to the first underlayment tile.

In an embodiment of the underlayment tile according to invention, the at least one predetermined snap-position corresponds with a compact configuration of an underlayment. In the compact configuration of the underlayment, the underlayment tiles are positioned close to each other. In particular, in the compact configuration, the underlayment tiles are positioned in a abutting engagement to each other. A sidewall of the first underlayment tile is positioned against the sidewall of an adjacent positioned underlayment tile. The snap fit connection maintains the underlayment in the compact configuration until they force is exerted on to the underlayment tiles which breaks the snap-fit connection and which causes the underlayment to extend to an extended configuration. In the extended configuration, the underlayment tiles are spaced apart from each other. In the extended configuration, the underlayment tiles have moved over a travel distance away from each other. The snap fit connection which maintains the underlayment in a first instance in the compact configuration is advantageous, because it may prevent an undesired transformation of the underlayment as a result of an internal stress in the underlayment. Such an internal stress may e.g. be caused by a bending stress of an installed heating conduit. They blended heating conduit may exert a force on to several underlayment tiles which might press the underlayment tiles away from each other. The snap fit connection advantageously prevents an undesired displacement of the underlayment tiles.

In an embodiment of the underlayment tile according to invention, the protrusion of the first coupling element comprises at least one snap element. The at least one snap element is positioned at a side face of the protrusion. In particular, the snap element is formed by a deepening. The recess of the second coupling elements comprises a complementary shaped snap element. The complementary snap element is positioned at a sidewall of the recess. In particular, the complementary snap element is formed by an elevation. The elevation is dimensioned such that the elevation fits into the deepening. Advantageously, the pair of snap elements provide a practical embodiment to obtain the snap fit connection.

In an embodiment of the underlayment tile according to invention, the underlayment tile is a one piece item. Preferably, the underlayment tile is manufactured by injection moulding. The underlayment tile is a one piece injection mould item. The one piece item comprises the tile body including the first and second coupling member. The first and second coupling member are integral with the tile body. The underlayment tile is made by an injection-moulding compound. By producing the underlayment tile by injection moulding, it is possible to obtain a cost-effective product. Preferably, the underlayment is mountable of a plurality of one type of identically shaped underlayment tiles. Preferably, the underlayment tile has an open work configuration. Apertures within the open work configuration can be filled with a hardening substantive like mortar. An assembly of such underlayment tiles may form an open work underlayment. The open work structure is for instance advantageous in finishing a wall by plastering. The open work configuration of the underlayment tile provides a support structure which provides rigidity to a plaster work. The side wall of the underlayment tile may include at least one ventilation through flow to provide access for an airflow from aside to the openwork structure of the underlayment tile. The ventilation throughflow may provide in a dry-installed temperature control system an air-passage to enhance a circulation of air. Circulated air may enter the underlayment via the ventilation throughflow and pass along a heating or cooling member connected to the underlayment before the air exits the underlayment to a room. Herewith, the circulated air may be heat controlled before the air enters a room which may advantageously increase a heating comfort.

In an embodiment of the underlayment tile according to invention, the tile body comprises an integrated fastener. The tile body and the fastener are integrated into a one piece item. The fastener maybe integrated in the tile body by injection moulding. In particular, the fastener is a plug. The plug can be used to fasten an underlayment tile to an underground. The plug can be broken or cut away from the tile body by an installer of the underlayment to use the plug to fasten the tile body to the underground. The installer may fasten the underlayment at one side to the surface, and pull at the other side of the surface to extend the underlayment from the compact to the extended configuration. Herewith, the underlayment can be installed by only one installer. The underlayment is user-friendly in its installation.

The underlayment tile comprises a channel portion for receiving a line member at a top side of the tile body. In particular, the line member is a liquid conduit of a heating system. The liquid conduit may be a flexible plastic sleeve or a bendable metal conduit. An underlayment can be built by positioning a plurality of underlayment tiles side-by-side, wherein the channel portion is get into alignment. The aligned channel portion is form a channel in which the line member can be received. The underlayment tile may comprise straight and/or curved channel portions. The underlayment tile may comprise a pattern of channel portions. Advantageously, the pattern of channel portions provides an installer a plurality of opportunities to implement the line member on top of the underlayment.

Further, the invention relates to an underlayment mat. The underlayment mat comprises at least one row of pre-assembled underlayment tiles according to invention. Advantageously, the underlayment mat allows a quick installation of an underlayment. An installer can freely handle the underlayment mat and connect a subsequent underlayment mat to an already placed underlayment mat on a surface. Preferably, the underlayment mat has a rectangular non-square shape. The length of the underlayment mat differs from its width. The underlayment mat comprises a first amount of pre-assembled underlayment tiles in a first direction which first amount differs from a second amount of pre-assembled underlayment tiles in a perpendicular direction. A non-square underlayment mat provides a clear indication to an installer on how to orient the underlayment mat for placement of the underlayment. This advantageously may increase the speed of placing an underlayment.

In an embodiment of the underlayment mat according to the invention, the underlayment mat is packaged in a compact configuration. Preferably, in the compact configuration, the underlayment tiles of the underlayment mat are positioned in abutting engagement to each other. After placing the underlayment mats on a surface, the installer can extend the underlayment to the extended configuration.

In an embodiment of the underlayment mat according to invention, the preassembled underlayment tiles are wrapped around in a package, like a foil, to form an underlayment role. In particular, the underlayment role has a width of 120cm, preferably 90cm.

Further, an embodiment of the invention relates to an underlayment comprising a plurality of underlayment tiles according to invention. The underlayment is advantageous, because the underlayment is transformable from a compact configuration to an extended configuration. A transformation of the underlayment can be carried out after a placement of the underlayment in the compact configuration on a surface. The transformation of the underlayment may enlarge the underlayment such that the underlayment covers a desired surface area. Cuttings of underlayment tiles may become unnecessary. The underlayment according to the invention may be a heating underlayment, in particular a floor heating underlayment. Advantageously, the floor heating underlayment can be placed on a panel, like a floor, ceiling or sidewall, wherein the whole panel can be effectively covered. The floor heating underlayment may include cavities in the underlayment tiles which allow a circulation of air through the underlayment. In a dry installation of the floor heating underlayment, the circulation of air through the underlayment may provide a preheating before the circulated air leaves the underlayment and enters a room. Here with, the underlayment contributes to a comfort in heating.

Further, the invention relates to a method for installing an underlayment according to the invention. The method comprises the step of providing a plurality of underlayment tiles according to the invention. A step of interconnecting the underlayment tiles to each other. And a step of placing the underlayment tiles onto a surface area.

In an embodiment of the method according to the invention, the underlayment is installed by placing in a first step the first underlayment tile onto the surface area and in the second step of placing a second coupling member of the second underlayment tile over the first coupling member of the first placed underlayment tile. The second coupling member of the second underlayment tile is placed from above the top side of the first underlayment tile onto the first coupling member of the first underlayment tile. The first coupling member comprises a protrusion which provides a clear indication on how to orient the underlayment tile. The second coupling member includes a recess which is positioned across the protrusion. Advantageously, an underlayment is assembled in a quick manner.

In an embodiment of the method according to the invention, the underlayment is built up by interconnecting a plurality of underlayment mats in which each underlayment mat includes a plurality of pre-assembled underlayment tiles. The presence of underlayment mat is enables an increase in speed to place the underlayment.

In an embodiment of the method according to the invention, the method further comprises a step of extending the underlayment from a compact configuration to an extended configuration over a travel distance.

In an embodiment of the method according to the invention, the method further comprises a step of installing a line member onto the underlayment. Preferably, the placed underlayment is a heating underlayment, wherein the line member is a liquid conduit. In particular, the liquid conduit is a bendable sleeve. Preferably, the placed underlayment comprises a channel for receiving the line member, wherein the channel is formed by a plurality of aligned channel portions of the underlayment tiles.

Further, the invention relates to a use of an underlayment tile according to invention for installing an underlayment of a panel heating, in particular a floor heating.

Embodiments of the invention will be explained in more detail with reference to the appended drawings. The drawings show a practical embodiment according to the invention, which may not be interpreted as limiting the scope of the invention.
Fig. 1A shows a top view of an underlayment which comprises a plurality of underlayment tiles according to the invention, wherein the underlayment is shown in a compact configuration;
Fig. 1B shows the underlayment as shown in Fig. 1A in an extended configuration;
Fig. 1C shows an enlarged view in further detail of two adjacent underlayment tiles in the compact configuration;
Fig. 1D shows an enlarged view in further detail of two adjacent underlayment tiles in the extended configuration;
Fig. 2A shows a topview of an underlayment tile according to the invention;
Fig. 2B shows a front view of the underlayment tile of Fig. 2A;
Fig. 3A shows an enlarged sideview in further detail of a first and second coupling member in the compact configuration;
Fig. 3B shows an enlarged topview in further detail of the first and second coupling member as shown in Fig. 3A;
Fig. 3C shows an enlarged sideview of the of the first and second coupling member in the extended configuration;
Fig. 3D shows an enlarged topview in further detail of the first and second coupling member as shown in Fig. 3C;
Fig. 4A shows a cross sectional view about section line IV-IV as shown in Fig. 2A to illustrate a second coupling member; and
Fig. 4B shows an enlarged topview in further detail of the second coupling member as shown in Fig. 4A.

Identical reference numbers in the appended drawings indicate identical or functional similar components. To facilitate comprehension of the description and of the claims the words vertical, horizontal, longitudinal, traverse, cross-sectional - with reference to the gravity and to the trihedral X,Y,Z shown in the drawings - are used in a non-limiting way.

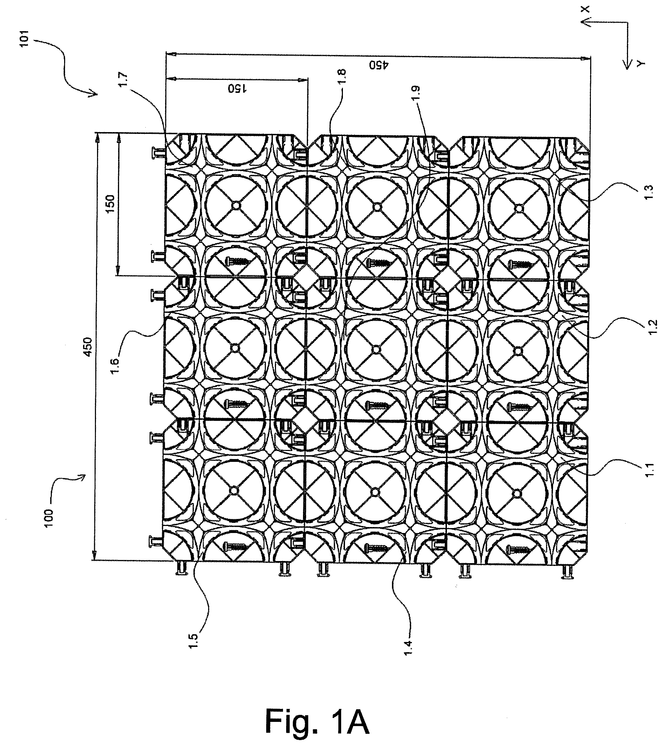

Fig. 1A shows a top view of an underlayment 100 according to the invention. The underlayment 100 is arranged to cover a surface area. The underlayment can be installed horizontally to cover a floor or ceiling area, inclined or vertically to cover a sidewall. The underlayment 100 is arranged to support an upper layer. The upper layer may be a top floor, like a carpet, a set of ceramic tiles, a laminate floor etc. which can be placed on top of the underlayment 100 to provide a proper floor finish. In another application, the underlayment 100 may be installed to provide a secure cable conduit to bridge a floor area. Then, the upper layer may be a cover plate of the cable conduit to cover the cable in the underlayment 100.

The underlayment 100 comprises at a top side at least one channel for receiving a line member, such as an electrical cable or a liquid conduit. In particular, the underlayment 100 is configured to install a floor heating. By using the underlayment 100, the floor heating can be installed in a dry or wet manner. In contrast to a dry installation of the underlayment, a wet installation means that a curing filler compound is admitted after placing the underlayment on a floor area to fill cavities of the underlayment 100.

The underlayment 100 comprises a plurality of underlayment tiles 1. The underlayment 100 is modular. The underlayment 100 is modulary formed out of one type of underlayment tiles. One type means that the outer dimensions of all underlayment tiles are equal. In the illustrated underlayment 100, all underlayment tiles are identical. An underlayment tile is arranged as a module to assemble an underlayment 100 in a modular manner by interconnecting as many underlayment tiles as desired to cover a floor area. The underlayment 100 can be assembled by interconnecting a plurality of underlayment tiles 1. The underlayment 100 is depicted together with an orthogonal coordinate system including an X-axis,Y-axis, and a Z-axis. The X-axis defines a length direction of the underlayment, while the Y-axis defines a width direction of the underlayment. The Z-axis defines a height dimension of the underlayment. Typically, the underlayment is a temperature control underlayment which has a height of at most 18mm, in particular at most 12mm. Each underlayment tile 1 has a channel portion at a top side. Adjacent underlayment tiles 1 form the channel for receiving the line member. A sleeve for heating or cooling can be positioned into the channel. Typically, such sleeve has a diameter of 16mm or 10mm which determines a height dimension of the underlayment of at most 18mm or at most 12mm. The small diameter sleeve of 10mm is especially suitable for renovation operations. The small diameter reduces an increase of floor height when implementing the underlayment as a temperature control panel.

The shown underlayment 100 has nine interconnected underlayment tiles 1.1, 1.2, 1.3,1.4, 1.5, 1.6,1.7, 1.8, 1.9 which together form a underlayment mat comprising at least one row of pre-assembled underlayment tiles. The underlayment mat of pre-assembled underlayment tiles 1 can be used to quickly assemble a complete underlayment to cover a large floor area. The underlayment mat can be provided as a flat package or as a rolled up package. The underlayment 100 has protruding connector members in X- and Y-direction which allows a connection of additional underlayment tiles.

The illustrated underlayment mat 101 has a square shape. The underlayment mat contains three interconnected rows of three interconnected underlayment tiles. Preferably, the underlayment mat has a rectangular shape having a width dimension different from its length dimension. In other words, the underlayment mat comprises less rows than the amount of interconnected underlayment tiles in an individual row, wherein the largest length or width dimension of the underlayment mat defines such a row. A non-square shape of the underlayment mat 101 will give a user a clear indication to place the underlayment mat 101 in a desired orientation. Herewith, the non-square shape is helpful to prevent a wrong placement of the underlayment mat, in which adjacent positioned underlayment mats cannot couple.

The illustrated underlayment mat 101 has a length in X-direction of 45cm and a width in Y-direction of 45cm. The illustrated underlayment mat 101 has three rows of underlayment tiles, which are positioned side-by-side in X-direction, wherein each row includes three underlayment tiles in Y-direction. Each underlayment tile has a length and width dimension of 150mm. In particular a width dimension of at most 200mm, more in particular at most 150mm is preferred in a renovation method. A width dimension of at most 500mm, in particular at most 300mm is suitable for placement of an underlayment in a new building. Preferably, an underlayment mat 101 comprises a first amount of pre-assembled underlayment tiles in a first direction which first amount differs from a second amount of pre-assembled underlayment tiles in a perpendicular direction. In particular, an underlayment mat of pre-assembled underlayment tiles have a length of 120cm and a width of 90cm. Preferably, an underlayment mat comprises eight pre-assembled interconnected rows of underlayment tiles in length direction, wherein each row contains six pre-assembled interconnected underlayment tiles.

Fig. 1A shows the interconnected underlayment tiles 1.1-1.9 in abutting engagement with each other. The underlayment 100 is shown in a compact configuration. In use, the underlayment can be transformed from the compact configuration to an extended configuration. The underlayment tiles 1.1-1.9 are interconnected, such that the underlayment 100 is extendable from the compact configuration to an extended configuration. An installer may grip a particular underlayment tile portion of the underlayment to pull the tile away from another tile.

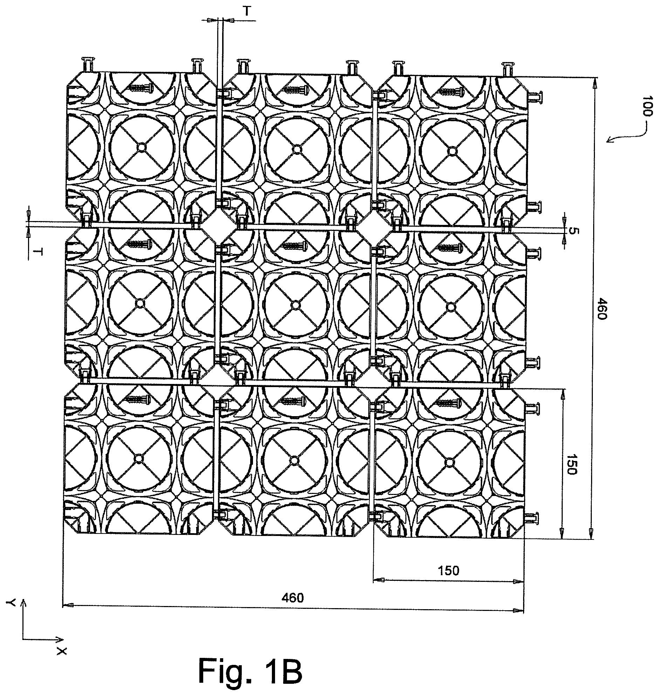

Fig. 1B shows the extended configuration of the underlayment. In the extended configuration, the underlayment tiles have moved away from each other. As illustrated in Fig. 1B, the underlayment tiles 1 have moved from each other in both the length (X) and the width (Y) direction.

The underlayment tiles 1 as shown in Fig. 1B have moved away from each other in X- and Y-direction. A user can extend the underlayment 100 selectively in X- or Y-direction. A row of underlayment tiles is selectively movable from an adjacent positioned row of underlayment tiles. The interconnection of the underlayment tiles is arranged such that an extension of the underlayment results in a movement of a complete row of underlayment tiles, wherein a row is directed in X- or Y-direction. In the extended configuration a row of underlayment tiles is spaced apart from a neighboring row of underlayment tiles. In particular, the row of underlayment tiles is spaced about at least 5mm from the neighboring row of underlayment tiles. The first and second coupling member extend in a longitudinal direction and are arranged to block a movement of the first coupling member with respect to the second coupling member in a traverse direction. By permitting only a movement of a complete row instead of permitting also a movement of an individual underlayment tile within a row, the interconnection of the underlayment tiles prevent advantageously a misalignment of channel portions at a top side of the two adjacent positioned underlayment tiles.

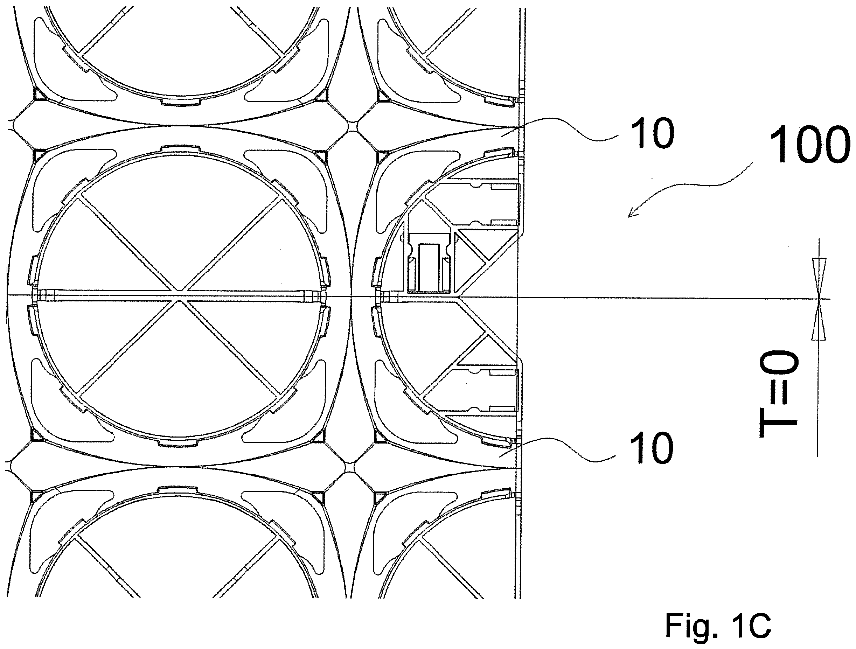

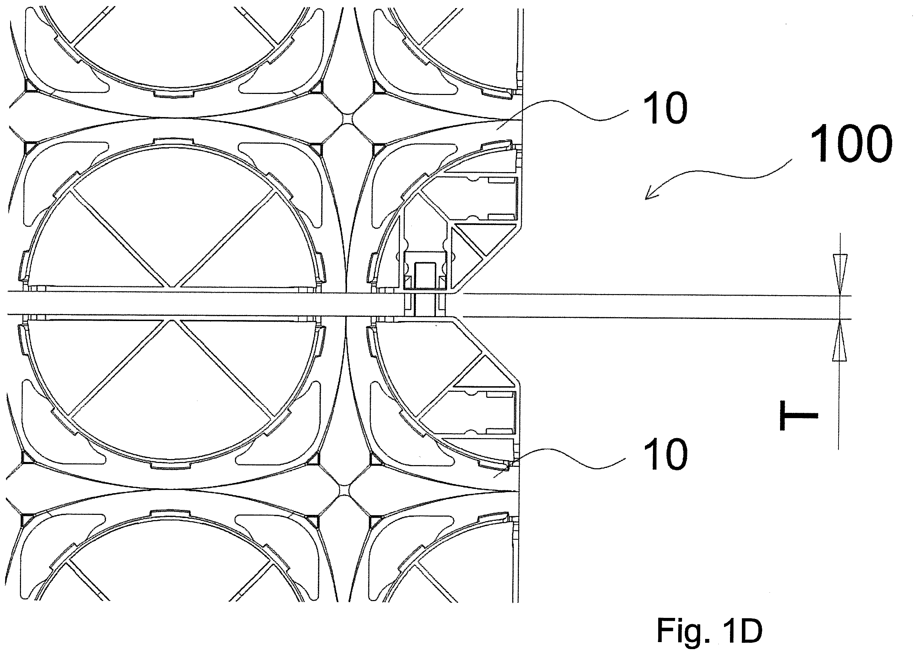

The underlayment 100 as shown in Fig. 1A in the compact configuration is transformable to the extended configuration as shown in Fig. 1B. Fig. 1C and Fig. 1D show an enlarged view in detail of two side-by-side positioned underlayment tiles. Each underlayment tile 1 is movable with respect to an adjacent underlayment tile 1 over a travel distance T of at least 2mm, in particular over a travel distance at least 5mm. Preferably, the underlayment tiles are movable with respect to each other over a travel distance T in between at least 2mm, in particular at least 5mm and at most 15mm, in particular at most 10mm. These dimensions are optimal to cover a usual floor area in a room of a building. During the relative movement of adjacent underlayment tiles, the adjacent underlayment tiles remain interconnected.

The underlayment of Fig. 1A can be used as an underlayment mat 101 of pre-assembled underlayment tiles.

Fig. 1C shows in an enlarged partial view, two adjacent underlayment tiles 1 in the compact configuration, wherein the adjacent underlayment tiles are in abutting engagement. In the compact configuration, the travel distance T is zero.

Fig. 1D shows in an enlarged partial view, two adjacent underlayment tiles 1 which are still interconnected, but moved away from each other over a travel distance T.

A cumulation of each individual travel distance T in between adjacent underlayment tiles results in a total extension of the underlayment 100 of several centimeters e.g 8cm which may be sufficient to position an outer contour of an underlayment 100 on a floor in abutting engagement to a side wall. Advantageously, the underlayment 100 can be installed adjacent to the side wall. Additionally, protrusions in a sidewall, e.g. a cove for conduits, may be circumvented without cutting a recess in the underlayment 100. Underlayment tiles can be left away locally at the position of the protrusion, and the underlayment 100 can be extended to position an underlayment edge close to a sidewall. Herewith, the underlayment can be installed user-friendly.

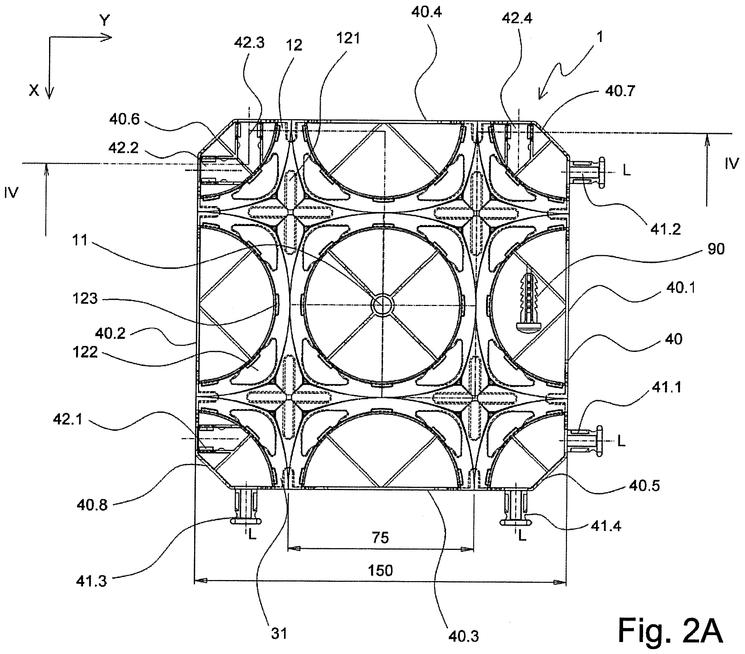

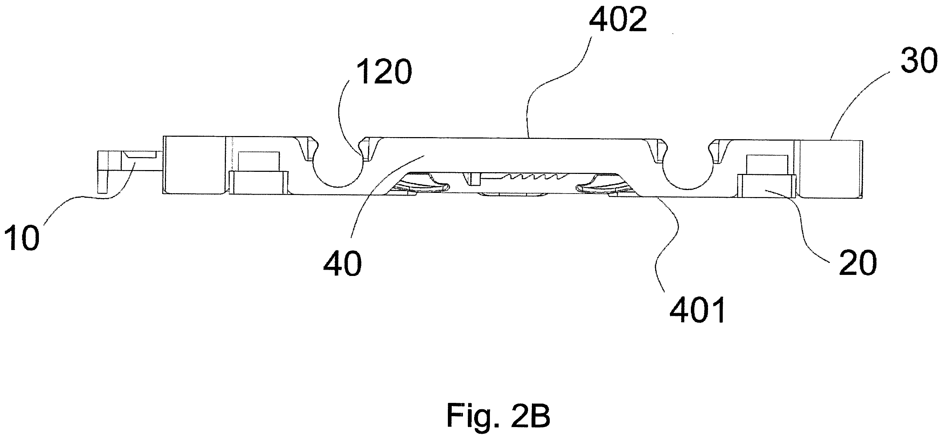

Fig. 2A shows a top view of a single underlayment tile 1. Fig. 2B shows a front view of the underlayment tile 1. The underlayment tile 1 is plate-shaped. The underlayment tile 1 is square shaped. The underlayment tile 1 has a length in X-direction and a width in Y-direction.

As shown in Fig. 2A, the underlayment tile 1 has a tile body 10. The tile body 10 is a one piece item. The tile body 10 is made by injection molding. The tile body 10 is made of a plastic material. The tile body 10 has an open-work structure. The tile body 10 has a length which is substantively equal to a width of the tile body 10. Substantively means here practically that the length and width are equal within a tolerance of at most 10mm, in particular at most 5mm, more in particular at most 1mm.

As shown in Fig. 2B, the underlayment tile 1 has a bottom side 20 for placing the tile body 10 on a surface area. The surface area may be panel as a floor or a sidewall of a building. The bottom side 20 defines a planar plane for a stable placement of the underlayment tile. In particular, the planar plane is defined by an outer edge of the bottom side 20.

The tile body 10 has a top side 30. The top side 30 is arranged to support an upper layer. The top side defines a planar plane which is in parallel with the planar plane defined by the bottom side. In particular, the planar plane of the top side 30 is defined by an outer edge of the top side 30.

The tile body 10 comprises at least one channel portion 120 for receiving a line member. The channel portion is open at the topside of the tile body. The channel portion is open over its whole length. A line member, such as a liquid conduit or an electrical cable can be placed from above the topside into the channel portion 120. The channel portion 120 has a channel wall to enclose the line member. The channel wall includes at least one pair of clamping members 123 to clamp the line member in the channel 12.

As shown in Fig. 2A, the tile body 10 comprises a pattern 12 of channel portions 120 for receiving a line member. The pattern is arranged in rotational symmetry about a centre 11 of the tile body 10. The pattern has a fourth fold rotational symmetry. The pattern 12 comprises two pairs of channel portions 120 in which each pair includes at least one straight channel portion 121 in one direction. The straight channel portion 121 extends in a straight direction. The straight direction extends in X- or Y-direction. The illustrated pair includes two straight channel portions 121 which are arranged in parallel. The channel portions 121 in a pair enable an installation of parallel extending line members. The two pairs of channel portions 121 are positioned perpendicular to each other. The two perpendicular pairs enable an installation of a straight line member in selectively an X- or Y-direction. The two pairs of channel portions intersect with each other at a channel intersection point. At the channel intersection point the pairs of channels are interconnected by at least one curved channel portion 122. The curved channel portion 122 enables an installation of a bended line member. As shown, a bend of the line member may be bended over 90° or 180°.

As shown in Fig. 2B, the tile body 10 has an outer circumferential side wall 40. The circumferential side wall 40 defines an outer contour of the tile body 10. The side wall 40 contains a lower and an upper edge 401, 402 which coincidences with respectively the outer edge of the bottom side and the top side. The lower edge 401 of the side wall 40 provides a support for the tile body 10 to support on a surface. The upper edge 402 of the side wall 40 provides a support for placement of an upper layer on top of the tile body 10.

The side wall 40 of the underlayment tile may be open work and include at least one ventilation aperture (not shown). The ventilation aperture may provide in a dry-installed surface heating an air-passage to enhance circulation of air. Circulated air may enter the underlayment via the ventilation aperture and pass along a heating member connected to the underlayment before the air exits the underlayment to a room. Herewith, the circulated air may be preheated before the air enters a room which may advantageously increase a heating comfort.

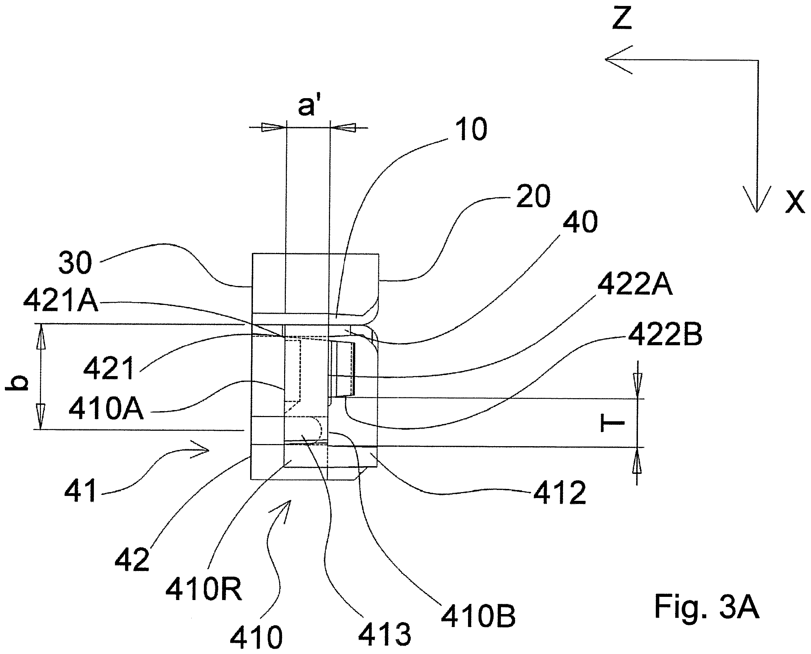

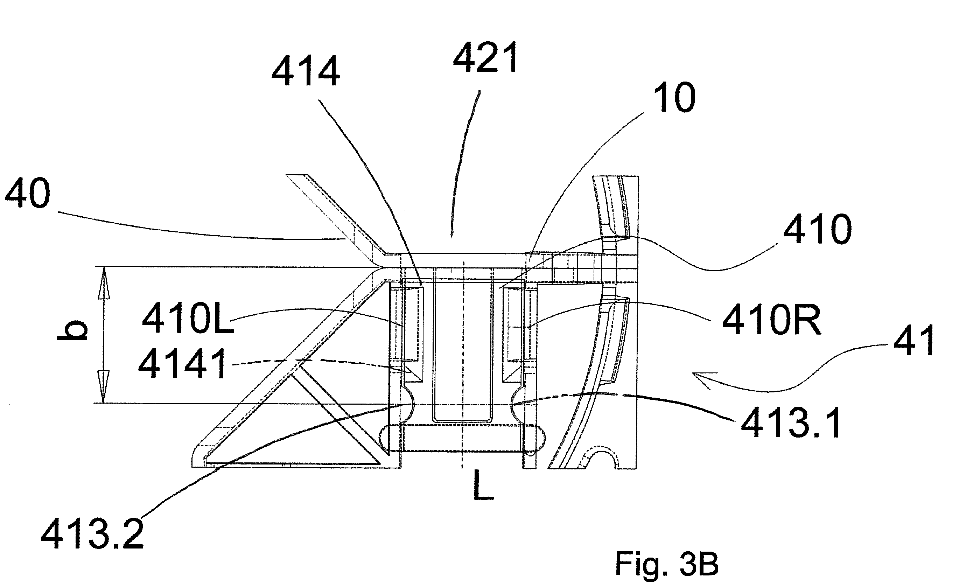

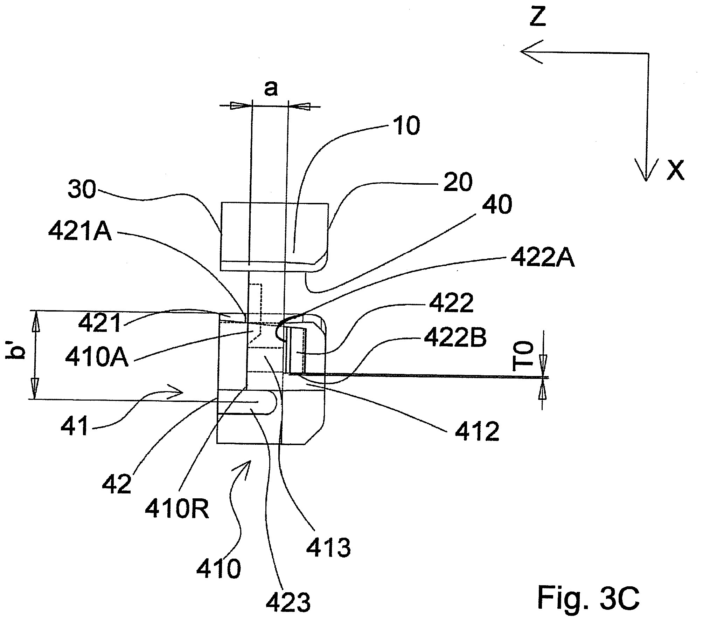

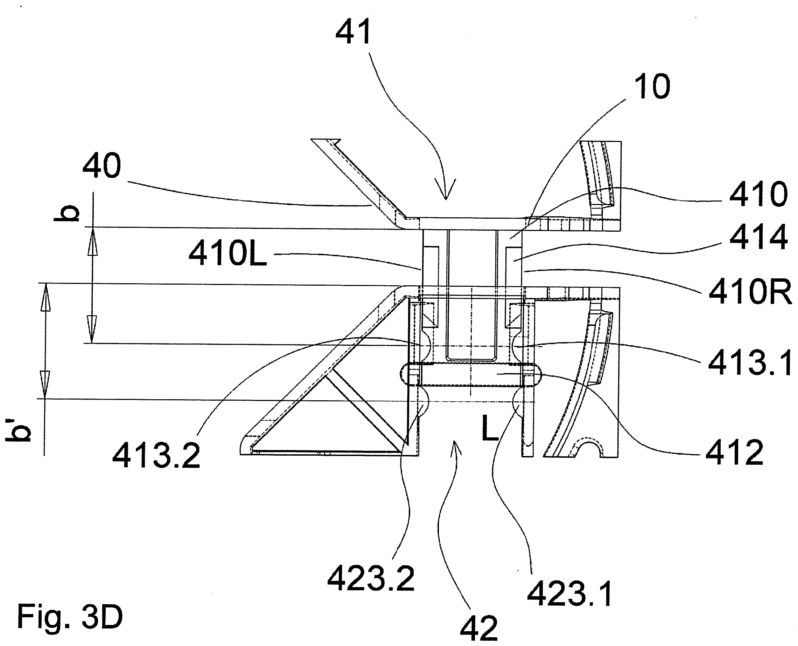

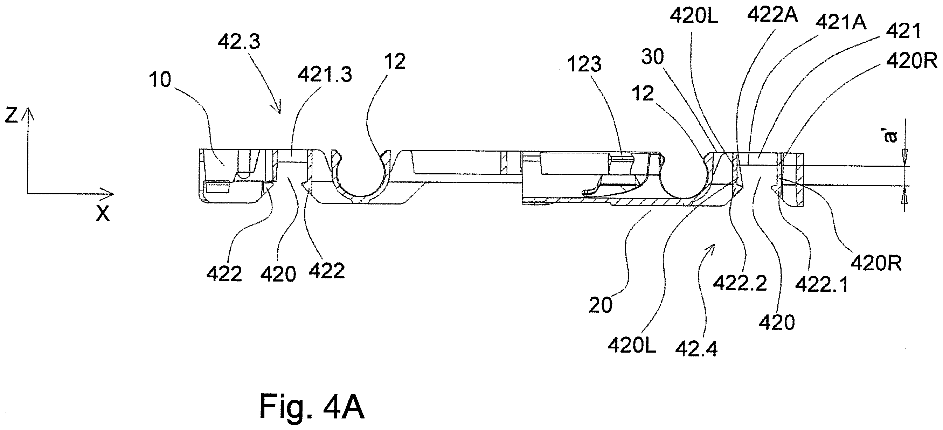

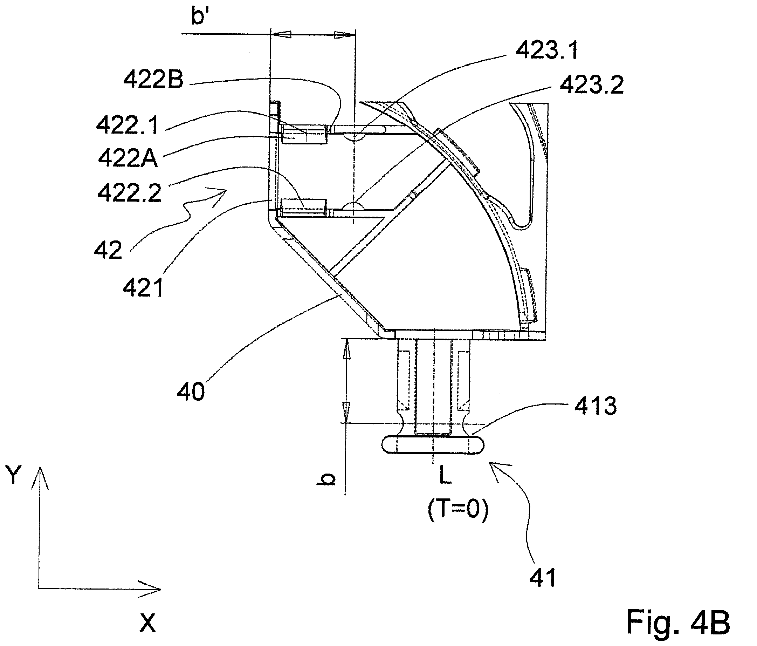

As shown in Fig. 2A, the circumferential side wall 40 includes at least a first side wall 40.1 and a second side wall 40.2. The second side wall 40.2 is positioned opposite the first side wall 40.1. Further, the circumferential side wall 40 includes a third side wall 40.3 and a fourth side wall 40.4. The third side wall 40.3 is positioned opposite the fourth side wall 40.4. Opposite positioned side walls, 40.1, 40.2; 40.3, 40.4 form a pair of side walls for connecting adjacent positioned tile bodies 10. A pair of side walls comprises a pair of coupling members for connecting two tile bodies 10 to each other. The pair of coupling members are illustrated in further detail in figures 3 and 4.

As shown in Fig. 2A, the tile body 10 comprises at least one pair of a complementary shaped first and second coupling member 41, 42. The first coupling member 41.1 is positioned at the first side wall 40.1 and the second coupling member 42.1 is positioned at the second side wall 40.2, such that two adjacent positioned underlayment tiles 1 are interconnectable by a pair of a respective first and second coupling member 41, 42 of each underlayment tile 1. The first coupling member 41 at the first side wall is aligned with the second coupling member 42 at the opposite second side wall.

The outer contour of the tile body 10 is substantively square-shaped. The square shaped tile body 10 has at least one chamfered corner, which provides at least one corner wall 40.5, 40.6, 40.7, 40.8.

Further, Fig. 2A shows a fastener formed as a plug 90. The plug 90 is a fastener for fastening a tile to an underground. The plug is moulded integrally with the tile body 10.

In Fig. 3A and 3B, the first coupling member 41 is shown in more detail together with contours of a complementary shaped second coupling member 42, which is illustrated in further detail in Fig. 4.

Fig. 3A and 3B show the first and second coupling member in a compact configuration.

Fig. 3C and 3D show the first and second coupling member in an extended configuration.

Fig. 3A illustrates a click and a snap fit connection of two complementary shaped coupling members 41,42. The click connection is provided to interconnect the two adjacent positioned underlayment tiles. The click connection prevents a release of interconnected underlayment tiles in a normal direction to the planar plane. The click connection allows a relative movement of two neighbouring underlayment tiles to the extended configuration, in which the underlayment tiles are spaced apart from each other. The snap fit is provided to maintain the interconnected underlayment tiles at a predetermined snap-position with respect to each other.

The first coupling member 41 has a protrusion 410 which protrudes in a longitudinal direction L. The protrusion 410 extends in an outwards direction away from the sidewall 40. The protrusion 410 extends in a direction perpendicular to the sidewall 40. The protrusion 410 comprises a proximal end which is connected to the sidewall 40. The protrusion 410 has a rectangular cross section. The protrusion 410 has a top face 410A, bottom face 410B, and left 410C and right 410D side face.

Fig. 4A and Fig. 4B show the second coupling member 42. Fig. 4A is a cross sectional view of the underlayment tile about IV-IV as shown in Fig. 2A. Fig. 4B shows in an enlarged topview the first and second coupling member 42 in further detail. The second coupling member 42 comprises a recess for receiving the first coupling member. Preferably, the recess is completely positioned behind the side wall 40. The second coupling element 42 extends from the side wall 40 inwards the underlayment tile, while the first coupling element 41 extends from the side wall 40 outwards the underlayment tile. The second coupling member 42 is provided internal the underlayment tile, while the first coupling member 41 is provided external the underlayment tile. The first coupling member 41 is formed as a male connector, while the second coupling member 42 is formed as a female connector. An internal -not protruding- second coupling member 42 is advantageous in preventing damage during a connection of adjacent underlayment tiles.

The recess of the second coupling member is open from beneath. The recess is open from the bottom side of the underlayment tile. The first coupling member 41 is receivable into the recess of the second coupling member by moving the recess over the protrusion 410. Two adjacent positioned underlayment tiles are interconnectable by placing a second underlayment tile over the first underlayment tile. An interconnection of two adjacent underlayment tiles is obtained by placing a recess of a second coupling member 42 over a protruding first coupling member 41. In laying an underlayment, this way of placing the underlayment tiles is user-friendly. It is easy to install the underlayment. In a first step, a first underlayment tile or mat 101 can be placed onto an underground and in a subsequent step a second underlayment tile or mat can be placed over the already stable positioned first underlayment tile or mat. Herewith, it is easy to establish the connection of adjacent underlayment tiles.

The recess is defined by two opposite recess walls 420 which define a longitudinal direction of the recess. The recess walls 420L, 420R prevent the first coupling member 41 to move in a direction in parallel with the planar plane which is traverse to the longitudinal direction L. A traverse movement of a first underlayment tile with respect to a second adjacent underlayment tile is prevented. Advantageously, the channel portions 120 of two adjacent underlayment tiles remain aligned.

The recess of the second coupling member 42 is closed from above by a recess barrier 421. The recess barrier 421 bridges the recess 420 at an upper region. The recess barrier is positioned at the top side of the underlayment tile. The recess barrier has a barrier bottom 421A to provide an abutting engagement with a protrusion 410 after introducing the first coupling member 41 into the recess.

The second coupling member 42 further comprises a recess hook 422. The recess hook 422 is configured as a first click connection member to click a received first coupling member 41 inside the recess 420. The recess hook 422 is also called a click finger. The recess hook 422 is positioned at the recess wall 420. The recess hook 422 includes an inclined hook wall for introducing the protrusion 410 and a substantially perpendicular hook wall 422A. The inclined hook wall serves to provide a smooth introduction of the first coupling member 41 into the recess, while the perpendicular hook wall 422A serves to lock an introduced first coupling member 41 into the recess of the second coupling member 42.

The smooth introduction of the recess hook 422 is further improved by a starting edge 414 at the top face 410A of the protrusion 410. As illustrated in Fig. 3B, a pair of opposite positioned starting edges 414 are provided at the top face 410A. The starting edge is provided at a part of the upper edge of the protrusion 410. The starting edge has a predetermined length. The starting edge 414 has a lead-in edge 4141. The lead-in edge 4141 is positioned at a distal end of the starting edge away from the sidewall 40 of the tile body 10. The lead-in edge guides an incoming recess hook of a second coupling element towards the sidewall. The positioning of the starting edge leads an incoming recess hook of a second coupling element close to the sidewall to an interconnection of two underlayment tiles in the compact configuration.

The perpendicular hook wall 42A is engageable with the bottom face 410B of the protrusion. A dimension 'a'' in Fig. 3A is defined in between the perpendicular hook wall 422A and the recess barrier bottom 421A, which is in accordance with a dimension 'a' of the protrusion 410 in between the topface 410A and the bottom face 410B as shown in Fig. 3C. Herewith, the protrusion 410 of the first coupling member 41 can be clicked in between the hook wall 422A and the barrier bottom 421A of the second coupling member 42. A movement of the first coupling member in a direction normal to the planar plane defined by the bottom side of the underlayment tile 1 is prevented by the click connection. Thus, the click connection of the first and second coupling member prevents a release of an once established interconnection in a normal direction to the planar plane.

Fig. 3A shows a stopper of the underlayment tile. The stopper has a first and second stop member which are respectively positioned at the first and second coupling member. As shown in Fig. 3A and 3B, the protrusion 410 comprises a travel blocker 412 as a first stop member for blocking a movement of a first underlayment tile 1 with respect to an adjacent tile in the longitudinal direction of the recess. The travel blocker 412 is positioned at a distal end of the protrusion 410. The travel blocker 412 defines a maximum travel distance T. The travel blocker 412 is formed by a protrusion which extends in a direction perpendicular to the protrusion 410. In particular, the travel blocker 412 extends downwards to the bottom side 20 of the underlayment tile 1. The travel blocker 412 of the first coupling member 41 cooperates with a second stop member, in particular at least one recess hook 422 of the second coupling member 42. The recess hook 422 includes a hook side wall 422B which is in an assembled condition of the underlayment tiles positioned opposite the travel blocker 412. The hook side wall 422B is a recess stopper face. The hook side wall 422B is a second stop member. In the compact configuration, the hook side wall 422B is spaced from the travel blocker 412 at a travel distance T. In the extended configuration, as seen in Fig. 3C, the hook side wall 422B is in abutting engagement with the travel blocker 412. The travel blocker 412 limits a travel distance T to a maximum. The travel blocker 412 prevents a release of two interconnected underlayment tiles by moving the underlayment tiles in parallel with the planar plane defined by the bottom side.

The snap fit connection is established in the compact configuration. The snap fit connection is maintained until a required pulling force is exerted to bring the underlayment to the extended configuration. To establish the snap fit connection, the protrusion 410 of the coupling member 41 comprises at least one snap element 413 for snapping the first coupling member in a predetermined position -a snap position- with respect to the second coupling member. The second coupling element 42 comprises a complementary shaped snap element 423. The snap element 413 and complementary snap element 423 define a pair of snap elements. Here, the snap element 413 is a snap recess 413 and the complementary shaped snap element 423 is a snap bulge 423. The snap bulge 423 fits into the snap recess 413 to obtain the snap fit. The snap element 413 is positioned at the distal end of the protrusion 410. The snap element 413 is spaced at a dimension 'b' from the side wall 40. The snap element 413 is provided in a side face of the protrusion 410. Here, the protrusion 410 comprises two snap elements 413.1, 413.2 which are provided in respectively the left and right side face 410L, 410R. The snap elements 413.1, 413.2 are positioned opposite each other. The two snap elements 413.1, 413.2 are aligned with each other, such that the two snap elements determine a stable single snap-position. The at least one snap element defines at least one snap-position in the snap fit. The complementary shaped snap element 423 is positioned at a side wall 422L, 422R of the recess 420. When receiving the protrusion 410 in the recess 420, the snap elements engages to each other to provide a snap-fit in a predetermined snap-position along the travel distance T.

Preferably, the predetermined position corresponds with the compact configuration of the underlayment. As illustrated in Fig. 4B, the snap element 423 is preferably spaced at a dimension 'b" away from the side wall 40, such that adjacent positioned underlayment tiles have abutting side walls 40 in the compact configuration. Such a single snap-position suffices in an application in which a line member is installed. The single snap-position may prevent an undesired extension of the underlayment for installing a line member. Due to a presence of an installed bended line member which is connected to a top side of adjacent underlayment tiles, one underlayment tile tend to shift away from an adjacent other underlayment tile. Without the snap elements, present bending stresses of the line member will exert a pressing force onto the underlayment tiles which will extend the underlayment.

Numerous variants are possible in addition to the embodiment shown. The shown embodiment relates to a temperature control underlayment.

Features and aspects described for or in relation with a particular embodiment may be suitably combined with features and aspects of other embodiments, unless explicitly stated otherwise. For example, the step of the method in which the underlayment is installed by placing in a first step a first underlayment tile onto the surface area and in a second step by placing second underlayment tile over the first placed underlayment tile can be carried out independent of the step of extending the underlayment from a compact configuration to an extended configuration over a travel distance. The feature of a click connection in between the first and second coupling member in which the click connection in between a first and secnd underlayment tile is established from a direction normal to the planar plane is regarded useful without the feature of a first and second coupling member which permit a relative movement over a travel distance of two interconnected underlayment tiles to transform the interconnected tiles from a compact to an extended configuration.

Although the invention has been disclosed with reference to particular embodiments, from reading this description those of skilled in the art may appreciate a change or modification that may be possible from a technical point of view but which do not depart from the scope of the invention as claimed hereafter. Modifications may be made to adapt a particular situation or material to the teachings of the invention without departing from the essential scope thereof. It will be understood by those of skilled in the art that various changes may be made and equivalents may be substituted for elements thereof without departing from the scope of the invention as defined in the claims. Therefore, it is intended that the invention is not limited to the particular embodiments disclosed in the above detailed description, but that the invention will include all embodiments falling within the scope of the appended claims.

Thus, the invention provides an underlayment formed by an interconnection of underlayment tiles, which underlayment is extendable from a compact configuration in which the underlayment tiles are positioned close to each other to an extended configuration in which the underlayment tiles are spaced apart from each other. The underlayment is easily transformable which allows a quick coverage of a delimited surface area.

## Claims

1. Underlayment tile (1) for an assembly of an underlayment (100) by interconnecting a plurality of such underlayment tiles (1), wherein the underlayment tile (1) comprises a tile body (10) including:
- a bottom side (20) for placing the tile body (10) on a surface, in which the bottom side (20) defines a planar plane for placement of the tile body on the surface;
- a top side (30) which is arranged to support an upper layer and which top side (30) comprises at least one channel portion (120) for receiving a heating conduit, such that the underlayment is suitable to be used as a floor heating underlayment; and
- an outer circumferential side wall (40) which includes at least a first side wall (40.1) and a second side wall (40.2) which second side wall (40.2) is positioned opposite the first side wall (40.1), wherein the tile body (10) comprises at least one pair of a complementary shaped first and second coupling member (41,42), in which the first coupling member (41) is positioned at the first side wall (40.1) and in which the second coupling member (42) is positioned at the second side wall (40.2), such that two adjacently positioned underlayment tiles (1) are interconnectable by a pair of a respective first and second coupling member of each underlayment tile, **characterised in that** the first coupling member (41) is formed as a male member which comprises a protrusion (410) which protrudes in a longitudinal direction (L), and **in that** the second coupling member (42) is formed as a female member which comprises a recess (420) which is configured to receive the protrusion (410), wherein the recess (420) comprises two opposite recess walls (420L,420R) for enclosing the protrusion (410) in between the recess walls (420L,420R), such that in an assembled condition of two underlayment tiles the first and second coupling member (41,42) block a relative movement of the underlayment tiles in parallel with the planar plane in a direction traverse to the longitudinal direction (L), wherein the first and second coupling member (41,42) permit a relative movement over a travel distance (T) of two interconnected underlayment tiles in the longitudinal direction (L), wherein a stopper (412, 422B) is provided for limiting the travel distance (T) in between the two interconnected underlayment tiles, such that the two interconnected underlayment tiles are movable from a compact to an extended configuration.

2. Underlayment tile according to claim 1, wherein the first coupling member (41) comprises a travel blocker (412) as a first stop member of the stopper for limiting the travel distance (T) of two interconnected underlayment tiles (1) in the longitudinal direction (L), wherein the travel blocker (412) is positioned at the protrusion (410) and wherein the second coupling member (42) comprises a recess stopper face (422B) as a second stop member of the stopper which is positioned at at least one of the recess walls (420L, 420R) for interacting with the travel blocker (412).

3. Underlayment tile according to claim 1 or 2, wherein the first and second coupling member (41, 42) provide a click connection to obtain a lockage of two interconnected underlayment tiles to prevent a premature release during placement of two interconnected underlayment tiles in a direction normal to the planar plane.

4. Underlayment tile according to claim 3, wherein the recess (420) comprises a first click connection member to barricade an introduction of the protrusion (410) into the recess (420) and wherein the recess is open for receiving the protrusion (410) in the direction normal to the planar plane, such that a first underlayment tile can be placed onto a surface, whereafter a second underlayment tile is placed from above over the first underlayment tile.

5. Underlayment tile according to any of the preceding claims, wherein the first and second coupling member (41,42) are arranged to provide a snap fit connection to provide at least one predetermined snap-position in the relative movement of two interconnected underlayment tiles along a travel distance T in the longitudinal direction L of the first coupling member (41).

6. Underlayment tile according to any of the preceding claims, wherein the underlayment tile comprises an open work structure.

7. Underlayment tile according to claim 6, wherein the sidewall (40) of the tile body (10) comprises at least one ventilation throughflow to provide an air passageway to the open work structure of the tile body (10).

8. Underlayment tile according to any of the preceding claims, wherein the tile body (10) comprises an integrated fastener (90) which is releasable connected to the tile body for taking the fastener away during installation of an underlayment (100).

9. Mat (101) for a quick-assembly an underlayment (100) comprising at least one row of pre-assembled tiles (10) according to any of the preceding claims.

10. Method for installing an underlayment comprising the steps of:
- providing a plurality of underlayment tiles according to any of the claims 1- 8;
- placing the underlayment tiles on a surface area; and
- interconnecting the underlayment tiles to each other.

11. Method according to claim 10, wherein the underlayment is installed by placing in a first step a first underlayment tile onto the surface area and in a second step by placing a second underlayment tile over the first placed underlayment tile.

12. Method according to claim 10 or 11, wherein the method further comprises a step of extending two neighbouring underlayment tiles of the underlayment from a compact configuration to an extended configuration over a travel distance T.

13. Use of an underlayment tile according to any of the claims 1-9 for installing a temperature control panel.

## Patentansprüche

1. Unterlegplatte (1) für einen Aufbau einer Unterlage (100) durch Verbinden einer Vielzahl solcher Unterlegplatten (1), wobei die Unterlegplatte (1) einen Plattenkörper (10) umfasst, der Folgendes beinhaltet:
- eine Unterseite (20) zum Platzieren des Plattenkörpers (10) auf einer Fläche, wobei die Unterseite (20) eine ebene Fläche zum Platzieren des Plattenkörpers auf der Fläche definiert;
- eine Oberseite (30), die zum Tragen einer oberen Schicht eingerichtet ist und welche Oberseite (30) mindestens einen Kanalabschnitt (120) zur Aufnahme einer Heizleitung umfasst, so dass die Unterlage als Fußbodenheizungsunterlage verwendet werden kann; und
- eine äußere, umlaufende Seitenwand (40), die mindestens eine erste Seitenwand (40.1) und eine zweite Seitenwand (40.2) aufweist, wobei die zweite Seitenwand (40.2) gegenüber der ersten Seitenwand (40.1) angeordnet ist, wobei der Plattenkörper (10) mindestens ein Paar eines komplementär geformten ersten und zweiten Kupplungselements (41, 42) umfasst, wobei das erste Kupplungselement (41) an der ersten Seitenwand (40.1) angeordnet ist und wobei das zweite Kupplungselement (42) an der zweiten Seitenwand (40.2) angeordnet ist, so dass zwei nebeneinander angeordnete Unterlegplatten (1) durch ein Paar eines jeweiligen ersten und zweiten Kupplungselements jeder Unterlegplatte miteinander verbindbar sind, **dadurch gekennzeichnet, dass** das erste Kupplungselement (41) als männliches Element ausgebildet ist, das einen Vorsprung (410) umfasst, der in Längsrichtung (L) vorsteht, und dass das zweite Kupplungselement (42) als weibliches Element ausgebildet ist, das eine Aussparung (420) umfasst, die konfiguriert ist, um den Vorsprung (410) aufzunehmen, wobei die Aussparung (420) zwei gegenüberliegende Aussparungswände (420L, 420R) umfasst, um den Vorsprung (410) zwischen den Aussparungswänden (420L, 420R) einzuschließen, so dass das erste und zweite Kupplungselement (41, 42) in einem montierten Zustand von zwei Unterlegplatten eine Relativbewegung der Unterlegplatten parallel zur ebenen Fläche in einer Richtung quer zur Längsrichtung (L) blockieren, wobei das erste und zweite Kupplungselement (41, 42) eine Relativbewegung über einen Verschiebeweg (T) von zwei miteinander verbundenen Unterlegplatten in Längsrichtung (L) ermöglichen, wobei ein Anschlag (412, 422B) zum Begrenzen des Verschiebewegs (T) zwischen den beiden miteinander verbundenen Unterlegplatten vorgesehen ist, so dass die beiden miteinander verbundenen Unterlegplatten von einer kompakten zu einer ausgedehnten Konfiguration bewegbar sind.

2. Unterlegplatte nach Anspruch 1, wobei das erste Kupplungselement (41) ein Blockiermittel (412) für den Verschiebeweg als ein erstes Anschlagelement des Anschlags zum Begrenzen des Verschiebeweges (T) von zwei miteinander verbundenen Unterlegplatten (1) in Längsrichtung (L) umfasst, wobei das Blockiermittel (412) an dem Vorsprung (410) positioniert ist, und wobei das zweite Kupplungselement (42) eine Anschlagfläche (422B) der Aussparung als zweites Anschlagelement des Anschlags umfasst, die an mindestens einer der Aussparungswände (420L, 420R) zum Zusammenwirken mit dem Blockiermittel (412) für den Verschiebeweg positioniert ist.

3. Unterlegplatte nach Anspruch 1 oder 2, wobei das erste und zweite Kupplungselement (41, 42) eine Klickverbindung bereitstellen, um eine Verriegelung von zwei miteinander verbundenen Unterlegplatten zu erhalten, um eine vorzeitige Freigabe während der Platzierung von zwei miteinander verbundenen Unterlegplatten in einer Richtung rechtwinklig zur ebenen Fläche zu verhindern.

4. Unterlegplatte nach Anspruch 3, wobei die Aussparung (420) ein erstes Klickverbindungselement umfasst, um eine Einführung des Vorsprungs (410) in die Aussparung (420) zu sperren, und wobei die Aussparung offen ist, um den Vorsprung (410) in der Richtung rechtwinklig zur ebenen Fläche aufzunehmen, so dass eine erste Unterlegplatte auf eine Fläche gelegt werden kann, woraufhin eine zweite Unterlegplatte von oben über der ersten Unterlegplatte platziert wird.

5. Unterlegplatte nach einem beliebigen der vorhergehenden Ansprüche, wobei das erste und zweite Kupplungselement (41, 42) eingerichtet sind, eine Schnappverbindung bereitzustellen, um mindestens eine vorbestimmte Schnappposition in der Relativbewegung von zwei miteinander verbundenen Unterlegplatten entlang eines Verschiebeweges T in der Längsrichtung L des ersten Kupplungselements (41) bereitzustellen.

6. Unterlegplatte nach einem beliebigen der vorhergehenden Ansprüche, wobei die Unterlegplatte eine durchbrochene Struktur aufweist.

7. Unterlegplatte nach Anspruch 6, wobei die Seitenwand (40) des Plattenkörpers (10) mindestens einen Lüftungsdurchgang umfasst, um einen Luftdurchgang zur durchbrochenen Struktur des Plattenkörpers (10) zu schaffen.

8. Unterlegplatte nach einem beliebigen der vorhergehenden Ansprüche, wobei der Plattenkörper (10) ein integriertes Befestigungselement (90) umfasst, das mit dem Plattenkörper lösbar verbunden ist, um das Befestigungselement während der Installation einer Unterlage (100) zu entfernen.

9. Matte (101) für eine Schnellaufbau einer Unterlage (100), die mindestens eine Reihe von vormontierten Platten (10) gemäß einem beliebigen der vorhergehenden Ansprüche umfasst.

10. Verfahren zum Aufbauen einer Unterlage, das die folgenden Schritte umfasst:
- Bereitstellen einer Vielzahl von Unterlegplatten nach einem beliebigen der Ansprüche 1- 8;
- Platzieren der Unterlegeplatten auf einem Bereich einer Fläche; und
- Verbinden der Unterlegeplatten miteinander.

11. Verfahren nach Anspruch 10, wobei die Unterlage aufgebaut wird, indem in einem ersten Schritt eine erste Unterlegplatte auf dem Bereich der Fläche platziert wird und in einem zweiten Schritt eine zweite Unterlegplatte auf die zuerst platzierte Unterlegplatte gelegt wird.

12. Verfahren nach Anspruch 10 oder 11, wobei das Verfahren ferner einen Schritt zum Entfernen von zwei benachbarten Unterlegplatten der Unterlage von einer kompakten Konfiguration zu einer ausgedehnten Konfiguration über einen Verschiebeweg T umfasst.

13. Verwendung einer Unterlegeplatte nach einem der Ansprüche 1-9 zum Anbringen eines Temperaturbedienfeldes.

## Revendications

1. Dalle (1) de sous-couche pour l'assemblage d'une sous-couche (100) en interconnectant une pluralité de telles dalles (1) de sous-couche, la dalle de sous-couche (1) comprenant un corps (10) de dalle comprenant:
- une face inférieure (20) pour placer le corps (10) de dalle sur une surface, dans laquelle la face inférieure (20) définit un niveau plan pour le placement du corps de dalle sur la surface ;
- une face supérieure (30) qui est agencée pour supporter une couche supérieure, laquelle face supérieure (30) comprend au moins une portion de canal (120) destinée à recevoir un conduit de chauffage, telle que la sous-couche est apte à être utilisée comme une sous-couche de chauffage par le sol ; et
- une paroi latérale circonférentielle externe (40) qui comprend au moins une première paroi latérale (40.1) et une deuxième paroi latérale (40.2), laquelle deuxième paroi latérale (40.2) est positionnée à l'opposé de la première paroi latérale (40.1), dans laquelle le corps (10) de dalle comprend au moins une paire d'un premier et d'un deuxième éléments de couplage (41, 42) de formes complémentaires, dans laquelle le premier élément de couplage (41) est positionné au niveau de la première paroi latérale (40.1) et dans laquelle le deuxième élément de couplage (42) est positionné au niveau de la deuxième paroi latérale (40.2), de telle sorte que deux dalles de sous-couche (1) positionnées de manière adjacente sont interconnectables par une paire d'un premier et d'un deuxième éléments de couplage respectifs de chaque dalle de sous-couche, **caractérisé en ce que** le premier élément de couplage (41) est formé comme un élément mâle qui comprend une saillie (410) qui fait saillie dans une direction longitudinale (L), et **en ce que** le deuxième élément de couplage (42) est formé comme un élément femelle qui comprend un évidement (420) qui est configuré pour recevoir la saillie (410), dans laquelle l'évidement (420) comprend deux parois d'évidement (420L, 420R) opposées pour entourer la saillie (410) entre les parois d'évidement (420L, 420R), de sorte que, à l'état assemblé de deux dalles de sous-couche, le premier et le deuxième éléments de couplage (41, 42) empêchent un mouvement relatif des dalles de sous-couche parallèlement au niveau plan dans une direction transversale à la direction longitudinale (L), dans laquelle le premier et le deuxième éléments de couplage (41, 42) permettant un mouvement relatif sur une distance de déplacement (T) de deux dalles de sous-couche interconnectées dans la direction longitudinale (L), dans laquelle une butée (412, 422B) est prévue pour limiter la distance de déplacement (T) entre les deux dalles de sous-couche interconnectées, de sorte que les deux dalles de sous-couche interconnectées soient mobiles d'une configuration compacte à une configuration étendue.

2. La dalle de sous-couche selon la revendication 1, dans laquelle le premier élément de couplage (41) comprend un bloqueur de course (412) en tant que premier élément d'arrêt de la butée pour limiter la distance de déplacement (T) de deux dalles (1) de sous-couche interconnectées dans la direction longitudinale (L), dans laquelle le bloqueur de course (412) est positionné au niveau de la saillie (410) et dans lequel le deuxième élément de couplage (42) comprend une face de butée en retrait (422B) en tant que deuxième élément de butée de la butée qui est positionné à au moins l'une des parois d'évidement(420L, 420R) pour interagir avec le bloqueur de course (412).

3. La dalle de sous-couche selon la revendication 1 ou 2, dans laquelle le premier et le deuxième éléments de couplage (41, 42) fournissent une connexion par clic pour obtenir un verrouillage de deux dalles de sous-couche interconnectées afin d'empêcher une libération prématurée lors du placement de deux dalles de sous-couche interconnectées dans une direction normale au niveau plan.

4. La dalle de sous-couche selon la revendication 3, dans laquelle l'évidement (420) comprend un premier élément de connexion par clic pour empêcher une introduction de la saillie (410) dans l'évidement (420) et dans laquelle l'évidement est ouvert pour recevoir la saillie (410) dans la direction normale au niveau plan, de sorte qu'une première dalle de sous-couche peut être placée sur une surface, après quoi une deuxième dalle de sous-couche est placée par au-dessus sur la première dalle de sous-couche.

5. La dalle de sous-couche selon l'une quelconque des revendications précédentes, dans laquelle le premier et le deuxième éléments de couplage (41, 42) sont agencés pour fournir une connexion par encliquetage pour fournir au moins une position de fermeture par encliquetage prédéterminée dans le mouvement relatif de deux dalles de sous-couche interconnectées le long d'un distance de déplacement T dans la direction longitudinale L du premier élément de couplage (41).

6. La dalle de sous-couche selon l'une quelconque des revendications précédentes, dans laquelle la dalle de sous-couche comprend une structure de travail ouverte.

7. La dalle de sous-couche selon la revendication 6, dans laquelle la paroi latérale (40) du corps (10) de dalle comprend au moins un flux de ventilation pour fournir un passage d'air à la structure de travail ouverte du corps (10) de dalle.

8. La dalle de sous-couche selon l'une quelconque des revendications précédentes, dans laquelle le corps (10) de dalle comprend une attache intégrée (90) qui est reliée de manière amovible au corps de dalle pour enlever l'attache pendant l'installation d'une sous-couche (100).

9. Tapis (101) pour l'assemblage rapide d'une sous-couche (100) comprenant au moins une rangée de dalles pré-assemblées (10) selon l'une quelconque des revendications précédentes.

10. Procédé pour installer une sous-couche comprenant les étapes consistant à:
- fournir une pluralité de dalles de sous-couche selon l'une quelconque des revendications 1 à 8;
- placer les dalles de sous-couche sur une zone de surface; et
- interconnecter les dalles de sous-couche les unes aux autres.

11. Le procédé selon la revendication 10, dans lequel la sous-couche est installée en plaçant dans une première étape une première dalle de sous-couche sur la zone de surface et dans une deuxième étape en plaçant une deuxième dalle de sous-couche sur la première dalle de sous-couche déjà placée.

12. Le procédé selon la revendication 10 ou 11, dans lequel le procédé comprend en outre une étape consistant à étendre deux dalles de sous-couche voisines de la sous-couche d'une configuration compacte à une configuration étendue sur une distance de parcours T.

13. Utilisation d'une dalle de sous-couche selon l'une quelconque des revendications 1 à 9 pour installer un panneau de contrôle de température.
